# EUROPEAN PATENT SPECIFICATION

(11) **EP 1 247 163 B1**
(45) Date of publication and mention of the grant of the patent: **05.11.2014**
(21) Application number: 00982587.8
(22) Date of filing: 13.12.2000
(51) Int. Cl.: G06F 3/12

(54) **PREPROCESSING METHOD FOR A VARIABLE DATA PRINT JOB SYSTEM**
DRUCKVERFAHREN FÜR VERÄNDERLICHES DATENJOB-DRUCKSYSTEM
PROCEDE DE PRETRAITEMENT POUR SYSTEME D'IMPRESSION DE DONNEES VARIABLES

(30) Priority: 11.01.2000 US 481736
(43) Date of publication of application: 09.10.2002
(73) Proprietor: Electronics for Imaging, Inc., Foster City, CA 94404 (US)
(72) Inventor: VIDYANAND, Ramgopal, Cupertino, CA 95014 (US); SCHWARZ, James, K., Jr., Boulder, CO 80302 (US); MOTAMED, Margaret, Foster City, CA 94404 (US)
(74) Representative: Zimmermann, Tankred Klaus
(86) International application number: PCT/US2000/033748
(87) International publication number: WO 2001/052048

(56) References cited:
- EP-A- 0 924 574
- EP-A1- 0 703 524
- GB-A- 2 330 030
- US-A- 5 495 561

## Description

### Technical field

This invention relates to translation of computer data to be printed into an optimized print job stream.

### Background Art

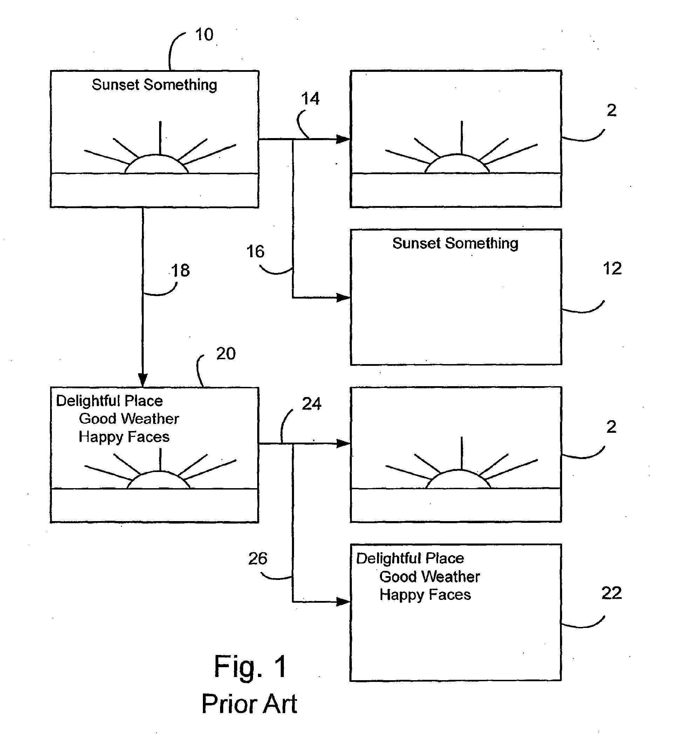

Figure **1** depicts a common prior art situation in which two frames **10** and **20,** which are part of a succession **18** of frames, both contain a common graphical object **2.** Arrow **14** designates the linkage of the background image **2** in frame **10.** Arrow **16** designates the linkage of the unique information **12** embedded in frame **10.** Arrow **24** designates the linkage of the background image **2** in frame **2 0.** Arrow **26** designates the linkage of the unique information **12** embedded in frame **20.**

There are many kinds of common documents incorporating redundant use of large graphical data components on repeated pages, slides or frames. Such documents include but are not limited to visual presentations created with presentation development tools such as Powerpoint™ by the Microsoft Corporation. These documents often contain one or more common backgrounds or background components entailing a large amount of graphical data which is used on several separate pages, or several times on the same page, or possibly a combination of several pages and more than once on a single page. Such common elements are also known as frame, slide or page layouts in certain situations. Examples of such redundant graphical data can be seen in repeated use of logos, clipart images, maps and pictures throughout a document.

Often these background graphical components 2 are quite large and complex graphical objects, involving subtle graphical operations such as blending more than one color across the background. A sunset 2, as indicated in Figure 1, exemplifies such a background graphical component. The rest of the data contained in the frame represents a stall amount of data compared to such background components. By way of example, component 2 may involve several million bytes whereas components 12 and 22 may each involve a few hundred or thousands of bytes. The repeated transmission of such background graphical data is redundant, and thus inefficient, since it consumes bandwidth delivered to the printer. It also inefficiently requires repeated processing by the printer to generate each frame.

What is needed is a mechanism by which such redundant graphical data can be determined, expressed as a master record, that master record sent to the printer system a minimum number of times, and instances of its use parameterized and sent to the printer referencing the master record.

US 5,495,561 discloses an object oriented printing interface in which margins, footnotes, page numbers etc. maybe added.

This invention solves the disclosed needs regarding the prior art.

One aspect of the invention is a method, defined in the appended claims, of translating a print object stream containing a succession of print objects into a print job stream containing print job objects. The print object stream is examined to create a collection of at least one master record. The print object stream is processed to create variable data objects as instances of at least one of the master records of the collection of the master records in the print job stream.

This method advantageously removes redundancies from large background or layout graphical objects commonly employed in documents and presentation materials. This significantly reduces the bandwidth requirements to send a print job stream to a printer. It significantly reduces the processing overhead at the printer involved in recalculating the common background or layout objects.

Embodiments of this method are advantageously implemented as a filtering style, program code component. Other embodiments are advantageously implemented as a batch style, program code component.

These and other advantages of the present invention will become apparent upon reading the following detailed descriptions and studying the various figures of the drawings.

### Brief Description of the Drawings

Figure **1** depicts a common prior art situation;
Figure **2** illustrates the translation of a print object stream into an optimized print job stream in accordance with an aspect of the invention;
Figure **3** illustrates the translation of a print object stream including the common situation from Figure **1** into an optimized print job stream as in Figure **2** in accordance with an aspect of the invention;
Figure **4** depicts a software data flow diagram illustrating how several embodiments of the invention would operate in accordance with an aspect of the invention;
Figure **5** depicts a flowchart for translating a print object stream containing a succession of print objects into a print job stream containing print job objects of certain embodiments in accordance with an aspect of the invention;
Figure **6** depicts a detail flowchart of operation **504** of Figure **5** in accordance with an aspect of the invention supporting user designation of master records;
Figure **7** depicts a detail flowchart of operation **504** of Figure **5** in accordance with an aspect of the invention supporting designating layout definitions as master records;
Figure **8** depicts a detail flowchart of operation **504** of Figure **5** in accordance with an aspect of the invention supporting designating background definitions as master records;
Figure **9** depicts a detail of operation **508** of Figure **5** in accordance with an aspect of the invention supporting processing a print object as an instance of a master record;
Figure **10** depicts a detail of operation **600** of Figure **9** in accordance with an aspect of the invention supporting processing variable data components of a print job object;
Figure **11** depicts a flowchart for translating a print object stream containing a succession of print objects into a print job stream containing print job objects of certain embodiments in accordance with an aspect of the invention;
Figure **12** depicts a detail flowchart of operation **804** of Figure **11** in accordance with an aspect of the invention supporting entering the current print object into the graphical print object library;
Figure **13** depicts a detail flowchart of operation **816** of Figure **11** in accordance with an aspect of the invention processing current print object as instance of found graphical object definition;
Figure **14** depicts a detail flowchart of operation **816** of Figure **11** in accordance with an aspect of the invention processing current print object as instance of found graphical object definition;
Figure **15** depicts a detail flowchart of operation **892** of Figure **14** in accordance with an aspect of the invention generating a reference to said found graphical object definition to create a graphical object reference further supporting parameter lists;
Figure **16** depicts a detail flowchart of operation **804** of Figure **11** in accordance with an aspect of the invention supporting integrating a document template from a document generation program;
Figure **17** depicts a detail flowchart of operation **932** of Figure **1** **6** in accordance with an aspect of the invention supporting integrating a document template from a document generation program supporting the integration of layouts; and
Figure **18** depicts a detail flowchart of operation **932** of Figure **16** in accordance with an aspect of the invention supporting integrating a document template from a document generation program supporting the integration of background objects.

### Detailed Description of the Invention

Figure **1** depicts a common prior art situation in which two frames **10** and **20,** which are part of a succession **18** of frames, both containing a common graphical object **2.** Arrow **14** designates the linkage of the background image **2** in frame **10.** Arrow **16** designates the linkage of the unique information **12** embedded in frame **10.** Arrow **24** designates the linkage of the background image **2** in frame **20.** Arrow **26** designates the linkage of the unique information **12** embedded in frame **20.**

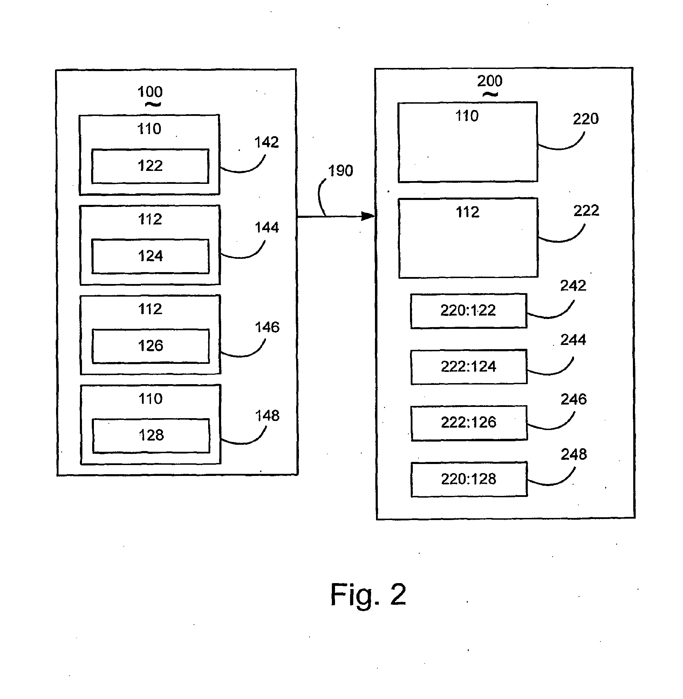

Figure **2** illustrates the translation of a print object stream into an optimized print job stream in accordance with an aspect of the invention.

A print object stream **100** is represented as a collection of frames **142, 144, 146** and **148.** Each of these frames contains one of two background graphical object components **110** and **112.** Each frame further possesses additional variable data. Frames **142, 144, 146** and **148** respectively contain background graphical object **110, 112, 112** and **110.** Frames **142, 144, 146** and **148** respectively contain variable data **122, 124, 126** and **128.**

The frame variable data may often be represented as a list of parameters applied to the background graphical object to further create the visual image of the frame. Frame variable data parameters may include but are not limited to text parameters, one or more scaling factors and orientation parameters. Orientation parameters include but are not limited to rotation parameters in 2 or 3 dimensions, parameters indicating the "flipping" or mirroring of the background graphical object.

Translation **190** converts print object stream **100** into print job stream **200.** Print job stream **200** contains a master record **220** based upon background **110** from print object stream **100** and a master record **222** based upon background **112** from print object stream **100.**

Variable print data record **242** is translated **190** from frame **142** of print object stream **100.** Variable print data record **242 contains** a reference to master record **220** and a representation of the variable data **122** extracted from frame **142.**

Variable print data record **244** is translated **190** from frame **144** of print object stream **100.** Variable print data record **244** contains a reference to master record **222** and a representation of the variable data **124** extracted from frame **144.**

Variable print data record **246** is translated **190** from frame **146** of print object stream **100.** Variable print data record **246** contains a reference to master record **222** and a representation of the variable data **126** extracted from frame **146.**

Variable print data record **248** is translated **190** from frame **148** of print object stream **100.** Variable print data record **248** contains a reference to master record **220** and a representation of the variable data **128** extracted from frame **148.**

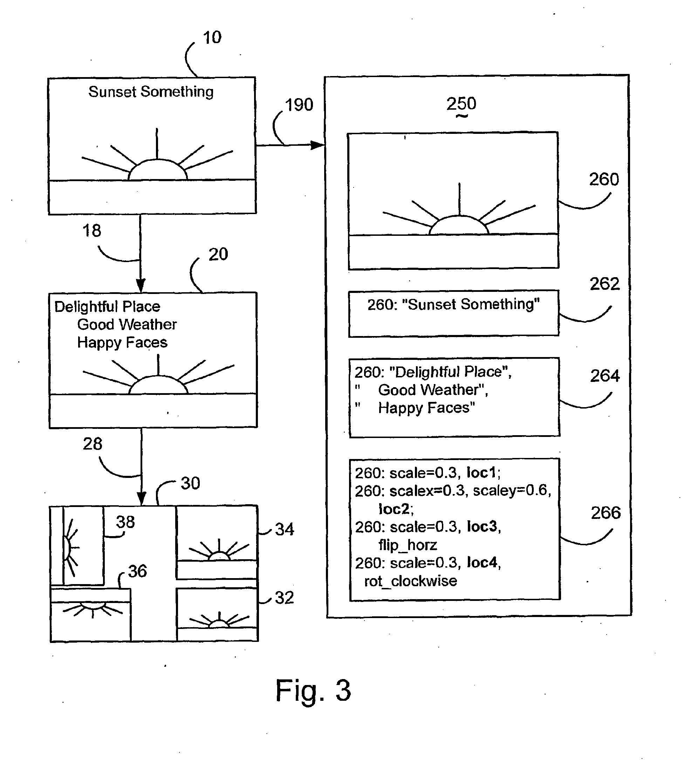

Figure **3** illustrates the translation of a print object stream including the common situation from Figure **1** into an optimized print job stream as in Figure **2** in accordance with an aspect of the invention. The two frames **10** followed **18** by **20** are further followed **28** by frame **30,** all containing a common graphical object **2.**

Frame **30** contains four instances **32, 34, 36** and **38** of the background graphical object **2.** Instance **32** is positioned at **loc1** and scaled both horizontally and vertically by an exemplified value of 0.3. Instance **34** is positioned at **loc2,** scaled horizontally by an exemplified value of 0.3 and scaled vertically by an exemplified value of 0.6. Instance **36** is positioned at **loc3** and scaled both horizontally and vertically by an exemplified value of 0.3 and oriented as indicated, which can be expressed as flipping about the horizontal axis. Instance **38** is positioned at **loc4** and scaled both horizontally and vertically by an exemplified value of 0.3 and oriented as indicated, which can be expressed as rotating clockwise.

Translation **190** of the print object stream produces the optimized print job stream **250.** Print job stream **250** contains a master record **260** based upon background **2** from print object stream.

Print object **10** is translated **190** into instance record **262** referencing master record **260** and containing a parameter represented as a list of one parameter represented as "Sunset Something", which was extracted from frame **10.**

Print object **20** is translated **190** into instance record **264** referencing master record **260** and containing a parameter represented as list of "Delightful Place", " Good Weather" and " Happy Faces", which was extracted from frame **20.**

Print object **30** is translated **190** into instance record **266** referencing four instances of master record **260.** The first instance has parameters represented as "scale=0.3, **loc1"** extracted from instance **32.** The second instance has parameters represented as "scalex=0.3,scaley=0.6, **loc2"** extracted from instance **34.** The third instance has parameters represented as "scale= 0.3, **loc3,** flop_horz" extracted from instance **36.** The fourth instance has parameters represented as "scale=0.3, **loc4,** rot_clockwise" extracted from instance **38.**

Note that while orientation factors of rotation and mirroring have been shown, orientation may also include and is not limited to rotation and mirroring about other lines, which may or may not reside in the viewing plane. Further, rotation may be by angles other than right angles. Orientation may be designated in terms of degrees, radians or any other units as designated by the user or application environment.

Further note that orientation parameters may be mixed with positioning as well as text parameters in certain embodiments.

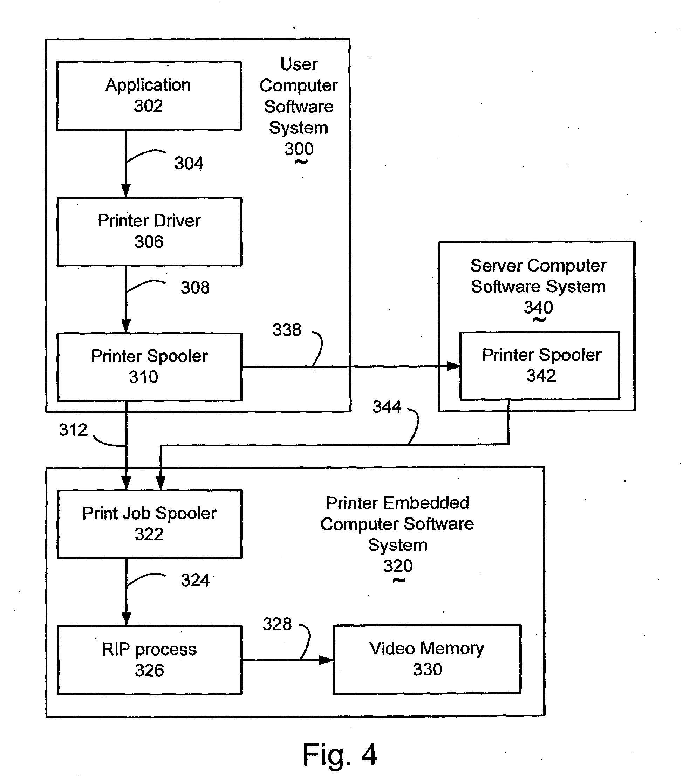

Figure **4** depicts a software data flow diagram illustrating how several embodiments of the invention would operate in accordance with an aspect of the invention.

User computer software system **300,** server computer software system **340** as well as printer embedded computer software system **320** each resides in computer readable memory accessibly coupled to their respective computer systems. As used herein a computer system includes at least one instruction processor, which can access the coupled computer readable memory, and execute the instructions residing therein. An instruction processor as used herein includes but is not limited to a microprocessor, multiple microprocessors, an embedded controller, a finite state machine, SIMD (Single Instruction Multiple Datapath) processor or MIMD (Multiple Instruction Multiple Datapath) processor. These instruction processors as used herein may include but are not limited to CISC, RISC or VLIW instruction processing architectures.

User computer software system **300,** server computer software system **340** as well as printer embedded computer software system **320** each contains an operating system in certain embodiments. The operating systems of **300, 340** and **320** may differ in certain embodiments. In certain further embodiments, the respective operating system is a real-time operating system supporting the concurrent operation of several program code components. In certain further embodiments, these program code components include but are not limited to threads. In certain other further embodiments, these program code components may include methods of objects. In certain further embodiments, these program code components communicate data and commands between themselves as indicated by the arrows of this figure.

User computer software system **300** contains an application **302** which sends **304** data to printer driver **306** which in turn sends **308** data to printer spooler **310.** In certain embodiments, printer spooler **310** sends **312** data to the print job spooler **322** in printer embedded computer software system **320.** Server computer software system **340** printer spooler **342** then sends **344** data to print job spooler **322** in printer embedded computer software system **320.** In certain other embodiments, printer spooler **310** sends **338** data to printer spooler **342** in server computer software system **340.**

Printer embedded computer software system **320** further contains a RIP process **326** and video memory **330.** Print job spooler **322** sends **324** data to RIP process **326.** RIP process **326** sends **328** data to video memory **330.**

Certain embodiments can be implemented as program code components residing in computer readable memory **300** to perform the translating methods in accordance with an aspect of the invention.

As used herein, the word object will have several uses and meanings in different embodiments. In certain embodiments, the word object will refer to a collection of data. In certain further embodiments, the word object will refer to a collection of data organized as data components. In certain further embodiments, the word object will refer to a collection of data containing multiple organizations of data components. In certain further embodiments, the word object will refer to a collection of data with at least one method function or operation associated with it. In certain further embodiments, the word object will refer to a collection of data with at least one method function or operation associated with it and operating upon the data collection. In certain further embodiments, the word object will refer to a collection of data with at least one method function or operation associated with it which are controlled by the collective state of the data collection. In certain further embodiments, the word object will refer to a collection of data with at least one method function or operation associated with it activated by one or more events. In certain further embodiments, the word object will refer to a collection of data with at least one method function or operation associated with it activated by events involving messages. In certain further embodiments, the word object will refer to a collection of data with at least one method function or operation associated with it with messages being treated as a component of the data collection.

A further embodiment includes at least one of the translating program code components in the user computer coupled computer readable memory 300 executes as an executable sub-program invoked within a user operated application program **302** and sending **304** the print job stream to a print driver **306.**

Another further embodiment includes at least one of the translating program code components in the user computer coupled computer readable memory **300** executing as a plug-in of a user operated application program **302** to generate an object which is then sent **304** to the printer driver **306.**

Another further embodiment includes at least one of the translating program code components in the user computer coupled computer readable memory **300** executes as a filter **304** between application program **302** and print driver **306.**

Another further embodiment includes at least one of the translating program code components in the user computer coupled computer readable memory **300** executes as print driver **306.**

Another further embodiment includes at least one of the translating program code components in the user computer coupled computer readable memory **300** executes as a filter **308** between print driver **306** and printer spooler **310.**

Another further embodiment includes at least one of the translating program code components in the user computer coupled computer readable memory **300** executes as a filter **308** between print driver **306** and printer spooler **310.**

Another further embodiment includes at least one of the translating program code components in the user computer coupled computer readable memory **300** executes as printer spooler **310.**

Another embodiment includes at least one of the translating program code components residing in the server computer coupled computer readable memory **340.**

Another embodiment includes at least one of the translating program code components residing in the printer embedded computer coupled computer readable memory **320.** In certain embodiments, the program code components reside in print job spooler **322.** In certain embodiments, the program code components reside as a filter **324** between print job spooler **322** and RIP process **326.**

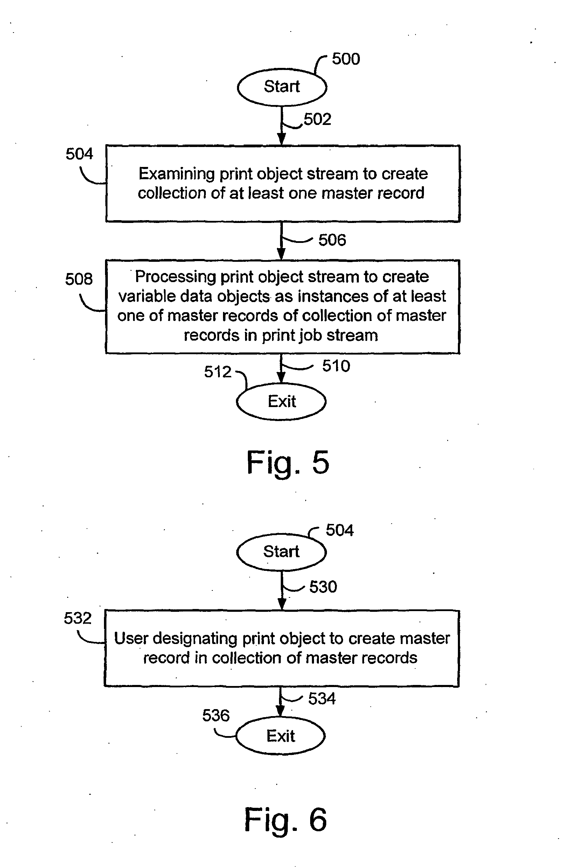

Figure **5** depicts a flowchart for translating a print object stream containing a succession of print objects into a print job stream containing print job objects of certain embodiments in accordance with an aspect of the invention.

Operation **500** starts the operations of this flowchart. Arrow **502** directs the flow of execution from operation **500** to operation **504.** Operation **504** performs examining the print object stream to create a collection of at least one master record. Arrow **506** directs execution from operation 504 to operation **508.** Operation **508** performs processing the print object stream to create variable data objects as instances of at least one of the master records of the collection of the master records in the print job stream. Arrow **510** directs execution from operation **508** to operation **512.** Operation **512** terminates the operations of this flowchart.

Figure **6** depicts a detail flowchart of operation **504** of Figure **5** supporting user designation of master records.

Arrow **530** directs the flow of execution from starting operation **504** to operation **532.** Operation **532** supports a user designating a print object to create a master record in the collection of master records. Arrow **534** directs execution from operation **532** to operation **536.** Operation **536** terminates the operations of this flowchart.

Note that in certain embodiments, the user may designate more than one master record. In certain embodiments, the user may copy or move print objects to specific locations in the print job stream as part of designating these print objects. In certain further embodiments, these locations may be at the beginning of the print object stream. In other further embodiments, these locations may be at the end of the print object stream. In certain embodiments the user may label or tag print objects as part of designating these print objects. In certain embodiments, the user may designate these print object by selecting them from an array of snapshots of the print objects.

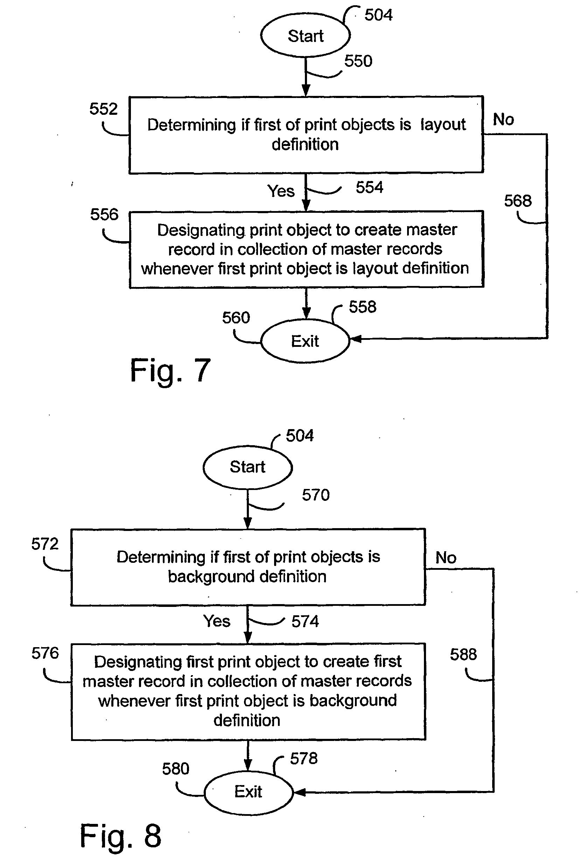

Figure 7 depicts a detail flowchart of operation **504** of Figure 5 in accordance with an aspect of the invention supporting designating layout definitions as master records.

Arrow **550** directs the flow of execution from starting operation **504** to operation **552.** Operation **552** performs determining if a first of the print objects is a layout definition. Arrow **554** directs execution from operation **552** to operation **556.** Operation **556** performs designating a print object to create a master record in the collection of master records whenever the first print object is the layout definition. Arrow **558** directs execution from operation **556** to operation **560.** Operation **560** terminates the operations of this flowchart.

Note that in certain embodiments, this flowchart may be implemented for a flag driven processor in which branching operations are minimized. In such implementations, operation **556** would be performed based upon the flag state. In certain alternative embodiments, a branching mechanism might be employed. Arrow **554** would be active directing execution whenever the first print object is the layout definition. Arrow **568** would be active whenever the first print object is the layout definition.

Figure **8** depicts a detail flowchart of operation **504** of Figure **5** in accordance with an aspect of the invention supporting designating background definitions as master records.

Arrow **570** directs the flow of execution from starting operation **504** to operation **572.** Operation **572** performs determining if a first of the print objects is a background definition. Arrow **574** directs execution from operation **572** to operation **576** whenever the first print object is the background definition. Operation **576** performs designating the first print object to create a first master record in the collection of master records whenever the first print object is the background definition. Arrow **578** directs execution from operation **576** to operation **580.** Operation **580** terminates the operations of this flowchart.

Arrow **588** directs execution from operation **572** to operation **580** whenever the first print object is not the background definition. Operation **580** terminates the operations of this flowchart.

Note that in certain embodiments, this flowchart may be implemented for a flag driven processor in which branching operations are minimized. In such implementations, operation **576** would be performed based upon the flag state. In certain alternative embodiments, a branching mechanism might be employed. Arrow **574** would be active directing execution whenever the first print object is the background definition. Arrow **588** would be active whenever the first print object is not the background definition.

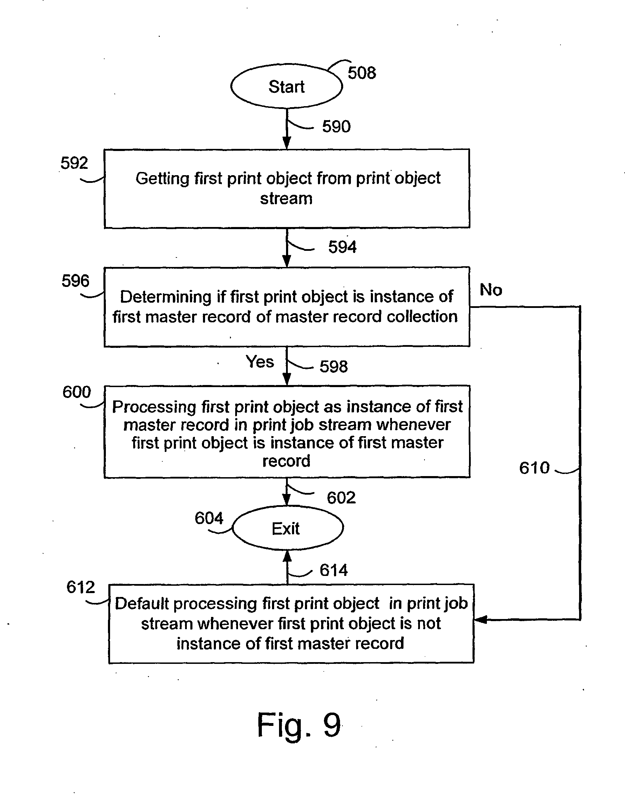

Figure **9** depicts a detail of operation **508** of Figure **5** in accordance with an aspect of the invention supporting processing a print object as an instance of a master record.

Arrow **590** directs the flow of execution from starting operation **508** to operation **592.** Operation **592** performs getting a first print object from the print object stream. Arrow **594** directs execution from operation **592** to operation **596.** Operation **596** performs determining if the first print object is an instance of a first master record of the master record collection. Arrow **598** directs execution from operation **596** to operation **600** whenever the first print object is an instance of the first master record. Operation **600** performs processing the first print object as an instance of the first master record in the print job stream whenever the first print object is instance of the first master record. Arrow **602** directs execution from operation **600** to operation **604.** Operation **604** terminates the operations of this flowchart.

Arrow **610** directs the flow of execution from starting operation **5596** to operation **612** whenever the first print object is not an instance of the first master record. Operation **612** performs default processing the first print object in the print job stream whenever the first print object is not an instance of the first master record. Arrow **614** directs execution from operation **612** to operation **604.** Operation **604** terminates the operations of this flowchart.

Note that in certain embodiments, this flowchart may be implemented for a flag driven processor in which branching operations are minimized. In such implementations, operations **600** and **612** would be performed based upon the flag state. In certain alternative embodiments, a branching mechanism might be employed. Arrow **598** would be active directing execution whenever the first print object is an instance of the first master record. Arrow **614** would be active whenever the first print object is not an instance of the first master record.

Note that in certain embodiments, there may be more than one master record in master record collection. In certain further embodiments, operation **596** acts to search the master record collection to find a first master record of which the first print object is an instance.

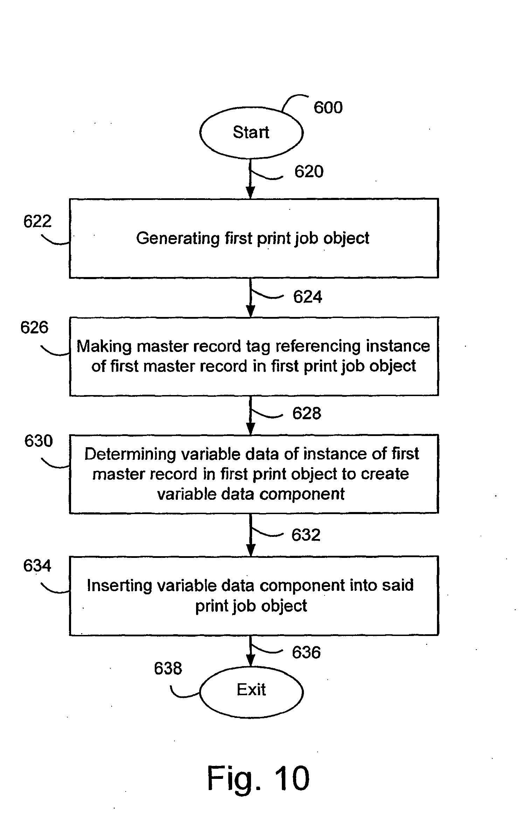

Figure **10** depicts a detail of operation **600** of Figure **9** in accordance with an aspect of the invention supporting processing variable data components of a print job object.

Arrow **620** directs the flow of execution from starting operation **600** to operation **622.** Operation **622** performs generating a first print job object. Arrow **624** directs execution from operation **622** to operation **626.** Operation **626** performs making a master record tag referencing the instance of the first master record in the first print job object. Arrow **628** directs execution from operation **626** to operation **630.** Operation **630** performs determining variable data of the instance of the first master record in the first print object to create a variable data component. Arrow **632** directs execution from operation **630** to operation **634.** Operation **634** performs inserting the variable data component into the first print job object. Arrow **636** directs execution from operation **634** to operation **638.** Operation **638** terminates the operations of this flowchart.

Note that in certain embodiments, where the operations of this flowchart are used repeatedly to process a single print object, operation **622** would only be performed once to generate a new first print object.

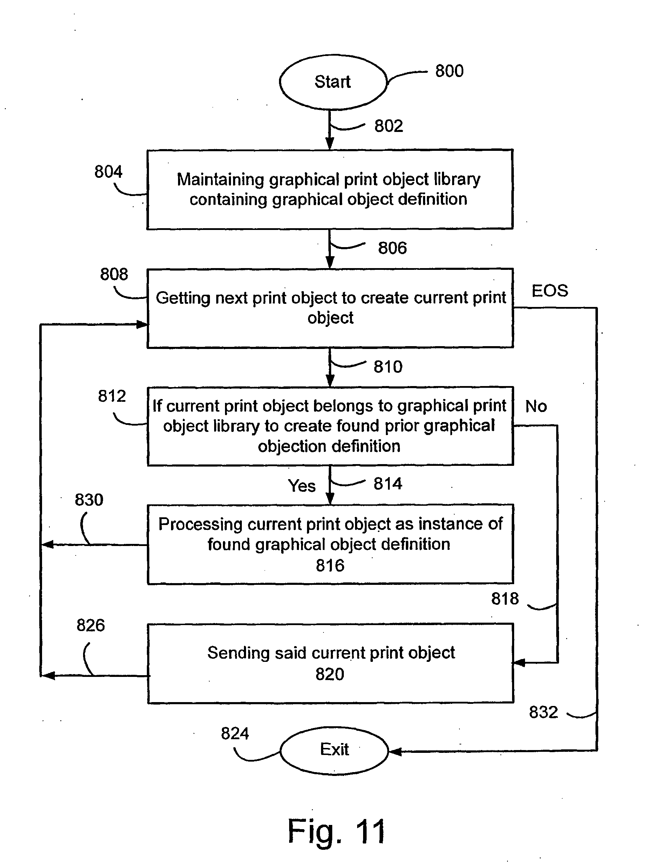

Figure **11** depicts a flowchart for translating a print object stream containing a succession of print objects into a print job stream containing print job objects of certain embodiments in accordance with an aspect of the invention.

Operation **800** starts the operations of this flowchart. Arrow **802** directs the flow of execution from operation **800** to operation **804.** Operation **804** performs maintaining a graphical print object library containing a graphical object definition. Arrow **806** directs execution from operation **804** to operation **808.** Operation **808** performs getting next print object to create a current print object. Arrow **810** directs execution from operation **808** to operation **812.** Operation **812** performs determining if the current print object belongs to the graphical print object library to create a found prior graphical object definition. Arrow **814** directs execution from operation **812** to operation **816.** Operation **816** performs processing the current print object as instance of the found graphical object definition whenever the current print object belongs to the graphical print object library. Arrow **818** directs execution from operation **812** to operation **820.** Operation **820** performs sending the current print object whenever the current print object does not belong to the graphical print object library. Arrow **826** directs execution from operation **820** to operation **808.** Arrow **830** directs execution from operation **816** to operation **808.**

Arrow **832** directs execution from operation **808** to operation **824** when getting next print object returns "EOS", which stands for End Of print Stream. Operation **824** terminates the operations of this flowchart.

Note that in certain embodiments, the operations of this flowchart may be applied in an iterative manner to the succession of print objects. In certain other embodiments, the operations of this flowchart may be applied based upon triggering an event. In certain further embodiments, the event may be triggered by the reception of a print object. In certain further embodiments, the print object may be treated as a message by elements of a real-time operating system. In certain further embodiments, the event may be part of a method of an instance of an object class.

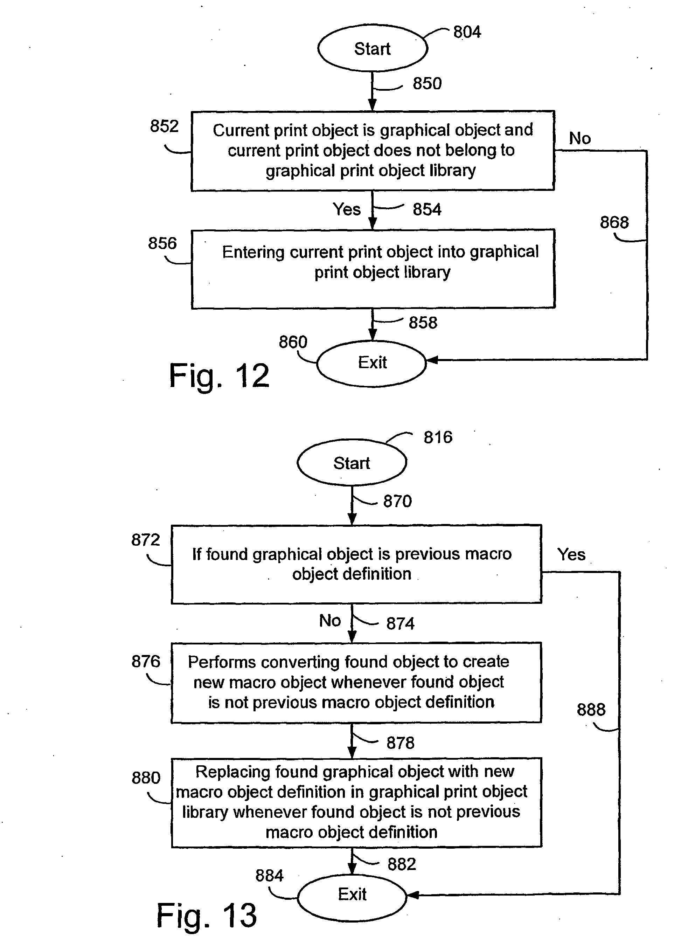

Figure **12** depicts a detail flowchart of operation **804** of Figure **11** in accordance with an aspect of the invention supporting entering the current print object into the graphical print object library.

Arrow **850** directs the flow of execution from starting operation **804** to operation **852.** Operation **852** determines whenever the current print object is a graphical object and whenever the current print object does not belong to the graphical print object library. Arrow **854** directs execution from operation **852** to operation **856** when the determination is 'Yes'. Operation **856** performs entering the current print object into the graphical print object library. Arrow **858** directs execution from operation **856** to operation **860.** Arrow **868** directs execution from operation **852** to operation **860** when the determination is 'No'. Operation **860** terminates the operations of this flowchart.

Figure **13** depicts a detail flowchart of operation **816** of Figure **11** in accordance with an aspect of the invention processing current print object as instance of found graphical object definition, supporting detecting whether the found graphical object definition is a previously defined macro definition, and modifying the graphical object library whenever the found graphical object definition is not a previously defined macro definition.

Arrow **870** directs the flow of execution from starting operation **816,** to operation **872.** Operation **872** performs determining whether the found graphical object is a previous macro object definition. Arrow **874** directs execution from operation **872** to operation **876** whenever the found object is determined not to be a previous macro object definition. Operation **876** performs converting the found object to create a new macro object whenever the found object is determined not to be a previous macro object definition. Arrow **878** directs execution from operation **876** to operation **880** whenever the found object is determined not to be a previous macro object definition. Operation **880** performs replacing the found graphical object with the new macro object definition in the graphical print object library whenever the found object is determined not to be a previous macro object definition. Arrow **882** directs execution from operation **880** to operation **884.** Operation **884** terminates the operations of this flowchart.

Arrow **888** directs execution from operation **872** to operation **884** whenever the found object is determined to be a previous macro object definition. Operation **884** terminates the operations of this flowchart.

Note that in certain embodiments, this flowchart may be implemented for a flag driven processor in which branching operations are minimized. In such implementations, operations **874** and **878** would be performed based upon the flag state. In certain alternative embodiments, a branching mechanism might be employed, in which case arrow **874** would be active directing execution when the found graphical object is not a previous macro definition, and arrow **888** would be active when the found graphical object is a previous macro definition.

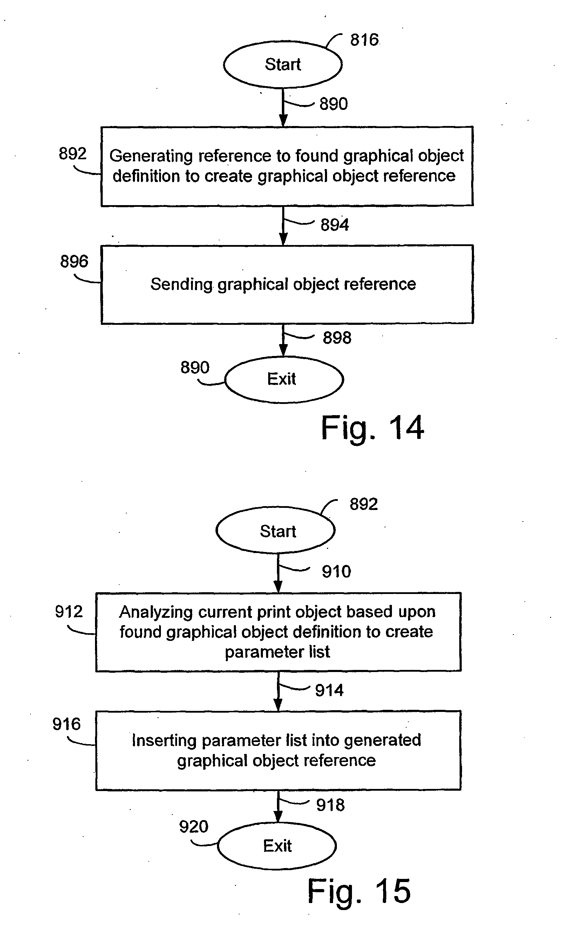

Figure **14** depicts a detail flowchart of operation **816** of Figure **11** in accordance with an aspect of the invention processing current print object as instance of found graphical object definition supporting generating and sending a found graphical object reference.

Arrow **890** directs the flow of execution from starting operation **816** to operation **892.** Operation **892** performs generating a reference to the found graphical object definition to create a graphical object reference. Arrow **894** directs execution from operation **892** to operation **896.** Operation **896** performs sending the graphical object reference. Arrow **898** directs execution from operation **896** to operation **900.** Operation **900** terminates the operations of this flowchart.

Note that in certain embodiments, operation **896** entails creating a data structure containing the graphical object reference accessible by application program **302.** In certain embodiments, operation **896** entails sending **308** the graphical object reference to printer spooler **310.** In certain embodiments, operation **896** entails sending **308** the graphical object reference to printer spooler **310.** In certain embodiments, operation **896** entails sending **312** the graphical object reference to printer job spooler **322.** In certain embodiments, operation **896** entails sending **338** the graphical object reference to printer spooler **342.** In certain embodiments, operation **896** entails sending **324** the graphical object reference to RIP process **326.**

Figure **15** depicts a detail flowchart of operation **892** of Figure **1** **4** in accordance with an aspect of the invention generating a reference to the found graphical object definition to create a graphical object reference further supporting parameter lists.

Arrow **910** directs the flow of execution from starting operation **892** to operation **912.** Operation **912** performs analyzing the current print object based upon the found graphical object definition to create a parameter list. Arrow **914** directs execution from operation **912** to operation **916.** Operation **916** performs inserting the parameter list into the generated graphical object reference. Arrow **918** directs execution from operation **916** to operation **920.** Operation **920** terminates the operations of this flowchart.

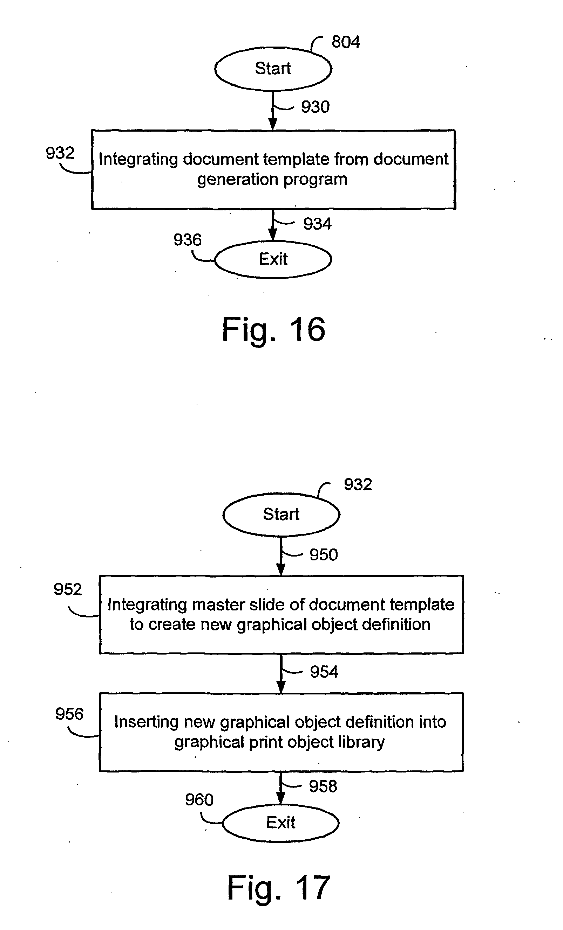

Figure **16** depicts a detail flowchart of operation **804** of Figure **11** in accordance with an aspect of the invention supporting integrating a document template from a document generation program.

Arrow **930** directs the flow of execution from starting operation **804** to operation **932.** Operation **932** performs integrating a document template from a document generation program. Arrow **934** directs execution from operation **932** to operation **936.** Operation **936** terminates the operations of this flowchart.

In certain embodiments, a document template may be a file referenced by using a file management system component of an operating system. In certain embodiments, a document template may reside in computer readable memory. In certain embodiments, a document template may be embedded as part of the print object stream.

Figure **17** depicts a detail flowchart of operation **932** of Figure **1** **6** in accordance with an aspect of the invention supporting integrating a document template from a document generation program supporting the integration of layouts.

Arrow **950** directs the flow of execution from starting operation **932** to operation **952.** Operation **952** performs integrating a master slide of the document template to create a new graphical object definition. Arrow **954** directs execution from operation **952** to operation **956.** Operation **956** performs inserting the new graphical object definition into the graphical print object library. Arrow **958** directs execution from operation **956** to operation **960.** Operation **960** terminates the operations of this flowchart.

Note that in certain embodiments, there may be more than one master slide in the document template, and that in such embodiments, iteration of this flowchart may be implemented. In certain embodiments, a user may designate master slides. In certain further embodiments, user designation of a master slide may be based upon position in the document template. In certain embodiments, master slides may also be referred to as layouts or layout templates.

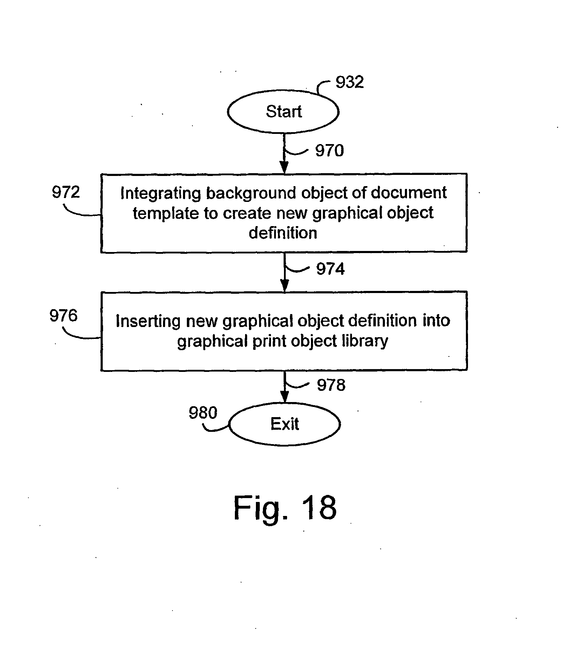

Figure **18** depicts a detail flowchart of operation **932** of Figure **16** in accordance with an aspect of the invention supporting integrating a document template from a document generation program supporting the integration of background objects.

Arrow **970** directs the flow of execution from starting operation **932** to operation **972.** Operation **972** performs integrating a background object of the document template to create a new graphical object definition. Arrow **974** directs execution from operation **972** to operation **976.** Operation **976** performs inserting the new graphical object definition into the graphical print object library. Arrow **978** directs execution from operation **976** to operation **980.** Operation **980** terminates the operations of this flowchart.

Note that in certain embodiments, background objects of a specific application program may also be known as layouts. In certain embodiments, there may be more than one background object in a document template.

Note that in certain embodiments, an aspect of the invention may be implemented as program code components in computer readable memory coupled to a user computer and executed upon the user computer to perform the translating method.

In certain further embodiments, at least one of the translating method program code components in the user computer coupled computer readable memory executes as an executable sub-program invoked within an application program the user operates and sending the print job stream to a print driver executing upon the user computer.

In another further embodiment, at least one of the translating method program code components in the user computer coupled computer readable memory executes as a plug-in of an application program the user operates and sending the print job stream to a print driver executing upon the user computer.

In another further embodiment, at least one of the translating method program code components in the user computer coupled computer readable memory executes as a filter between an application program the user operates and a print driver executing upon the user computer.

In another further embodiment, at least one of the translating method program code components in the user computer coupled computer readable memory executes as a print driver executing upon the user computer.

In another further embodiment, at least one of the translating method program code components in the user computer coupled computer readable memory executes as a filter between a print driver and a print spooler executing upon the user computer.

In another further embodiment, at least one of the translating method program code components in the user computer coupled computer readable memory executes as a print spooler executing upon the user computer.

In certain embodiments, the translating method is implemented as program code components in computer readable memory coupled to a server computer and executed upon the server computer to perform the translating method.

In certain embodiments, the translating method is implemented as program code components in computer readable memory coupled to an embedded of a printer and executed upon the embedded computer of the printer to perform the translating method.

The preceding embodiments have been provided by way of example and are not meant to constrain the scope of the following claims.

## Claims

1. A method of translating a print object stream (100) comprising a succession of sprint objects into a print job stream comprising print job objects, the method comprising:
creating (504) a master record (220) in a collection of master records by designating a print object from the print object stream as the master record, wherein the creation of a master record comprises:
determining (552) if a first of said print objects is a layout definition,
designating (556) a print object to create a master record in said collection of master records whenever said first print object is said layout definition,
determining (572) if a first of said print objects is a background definition, and
designating (576) said first print object to create a first master record in said
collection of master records whenever said first print object is said background definition;
and once a master record has been created, processing (508) the print object stream to create variable data objects (242) by generating a first print job object as an instance of the master record in the print job stream, determining (630) variable data of the instance of the master record in the first print object to create a variable data component; and
inserting (634) the variable data component into the first print job object;
wherein said master records and said variable data in said print object stream originate from single user application (302), wherein translating is implemented as program code components in computer readable memory, and wherein the program code components execute as a print driver (306) in a user computer software system (300).

2. The method of claim 1, wherein processing comprises:
getting the first print object (142) from the print object stream (100); and
processing the first print object as an instance of the master record (220) in the print job stream if the first print object is an instance of the master record.

3. The method of claim 2, wherein processing the first print object comprises:
generating (622) a first print job object; and
making (626) a master record tag that references the instance of the master record in the first print job object.

4. The method of claim 1, wherein the variable data objects comprise a parameter including any of text, scaling factor and orientation parameters.

5. The method of claim 4,wherein orientation parameters include any of rotation parameters and mirroring parameters.

## Patentansprüche

1. Ein Verfahren zum Übersetzen eines Druckobjektstroms (100), der eine Aufeinanderfolge von Druckaufträgen aufweist, in einen Druckauftragsstrom, der Druckauftragsobjekte aufweist, wobei das Verfahren folgende Schritte aufweist:
Erzeugen (504) eines Hauptsatzes (220) in einer Sammlung von Hauptsätzen durch Kennzeichnen eines Druckobjekts von dem Druckobjektstrom als Hauptsatz, wobei die Erzeugung eines Hauptsatzes folgende Schritte aufweist:
Bestimmen (552), ob ein erstes der Druckobjekte eine Layout-Definition ist,
Kennzeichnen (556) eines Druckobjekts, um jedes Mal, wenn das erste Druckobjekt die Layout-Definition ist, einen Hauptsatz in der Sammlung von Hauptsätzen zu erzeugen,
Bestimmen (572), ob ein erstes der Druckobjekte eine Hintergrunddefinition ist, und
Kennzeichnen (576) des ersten Druckobjekts, um jedes Mal, wenn das erste Druckobjekt die Hintergrunddefinition ist, einen ersten Hauptsatz in der Sammlung von Hauptsätzen zu erzeugen;
und sobald ein Hauptsatz erzeugt wurde, Verarbeiten (508) des Druckobjektstroms, um variable Datenobjekte (242) zu erzeugen durch Erzeugen eines ersten Druckauftragsobjekts als eine Instanz des Hauptsatzes in dem Druckauftragsstrom, Bestimmen (630) variabler Daten der Instanz des Hauptsatzes in dem ersten Druckobjekt, um eine variable Datenkomponente zu erzeugen; und
Einfügen (634) der variablen Datenkomponente in das erste Druckauftragsobjekt;
wobei die Hauptsätze und die variablen Daten in dem Druckobjektstrom von einer einzigen Nutzeranwendung (302) stammen, wobei das Übersetzen implementiert ist als Programmcodekomponenten in computerlesbarem Speicher, und wobei die Programmcodekomponenten als ein Druckertreiber (304) in einem Nutzercomputersoftwaresystem (300) ausführen.

2. Das Verfahren gemäß Anspruch 1, bei dem das Verarbeiten folgende Schritte aufweist:
Erhalten des ersten Druckobjekts (142) von dem Druckobjektstrom (100); und
Verarbeiten des ersten Druckobjekts als eine Instanz des Hauptsatzes (220) in dem Druckauftragsstrom, falls das erste Druckobjekt eine Instanz des Hauptsatzes ist.

3. Das Verfahren gemäß Anspruch 2, bei dem das Verarbeiten des ersten Druckobjekts folgende Schritte aufweist:
Erzeugen (622) eines ersten Druckauftragsobjekts; und
Erstellen (626) einer Hauptsatzkennung, die die Instanz des Hauptsatzes in dem ersten Druckobjekt referenziert.

4. Das Verfahren gemäß Anspruch 1, bei dem die variablen Datenobjekte einen Parameter aufweisen, der einen von Text-, Skalierungsfaktor- und Ausrichtungsparametern umfasst.

5. Das Verfahren gemäß Anspruch 4, bei dem die Ausrichtungsparameter einen von Drehparametern und Spiegelparametern umfassen.

## Revendications

1. Procédé de conversion d'un flux d'objet d'impression (100) comprenant une succession d'objets d'impression dans un flux de travaux d'impression comprenant des objets de travaux d'impression, le procédé comprenant le fait de:
créer (504) un fichier maître (220) dans une collection de fichiers maîtres en désignant un objet d'impression à partir du flux d'objets d'impression comme fichier maître, où la création d'un fichier maître comprend le fait de:
déterminer (552) si un premier desdits objets d'impression est une définition de mise en page,
désigner (556) un objet d'impression pour créer une fichier maître dans ladite collection de fichiers maîtres à chaque fois que ledit premier objet d'impression est ladite définition de mise en page,
déterminer (572) si un premier desdits objets d'impression est une définition de fond, et
désignation (576) ledit premier objet d'impression pour créer un premier fichier maître dans ladite collection de fichiers maîtres chaque fois que ledit premier objet d'impression est ladite définition de fond;
et une fois qu'un fichier maître a été créé, traiter (508) le flux d'objets d'impression pour créer des objets à données variables (242) en générant un premier objet de travail d'impression comme instance du fichier maître dans le flux de travaux d'impression, déterminer (630) les données variables de l'instance du fichier maître dans le premier objet d'impression, pour créer une composante de données variables; et
insérer (634) e la composante de données variables dans le premier objet de travail d'impression;
dans lequel lesdits fichiers maîtres et lesdites données variables dans ledit flux d'objets d'impression proviennent d'une seule application d'utilisateur (302), dans lequel la conversion est mise en oeuvre comme composantes de code de programme dans une mémoire lisible par ordinateur, et dans lequel les composantes de code de programme exécutent comme pilote d'impression (306) dans un système de logiciel informatique d'utilisateur (300).

2. Procédé selon la revendication 1, dans lequel le traitement comprend le fait de:
obtenir le premier objet d'impression (142) du flux d'objets d'impression (100); et
traiter le premier objet d'impression comme une instance du fichier maître (220) dans le flux de travaux d'impression si le premier objet d'impression est une instance du fichier maître.

3. Procédé selon la revendication 2, dans lequel le fait de traiter le premier objet d'impression comprend le fait de:
générer (622) un premier objet de travail d'impression; et
réaliser (626) une étiquette de fichier maître qui fait référence à l'instance du fichier maître dans le premier objet de travail d'impression.

4. Procédé selon la revendication 1, dans lequel les objets à données variables comprennent un paramètre comprenant l'un ou l'autre parmi un texte, un paramètre de mise à l'échelle et des paramètres d'orientation.

5. Procédé selon la revendication 4, dans lequel les paramètres d'orientation comportent l'un ou l'autre parmi des paramètres de rotation et des paramètres de mise en miroir.
